# EUROPEAN PATENT SPECIFICATION

(11) **EP 4 042 910 B1**
(45) Date of publication and mention of the grant of the patent: **21.05.2025**
(21) Application number: 22156001.4
(22) Date of filing: 09.02.2022
(51) Int. Cl.: A47J 31/36, A47J 31/38, A47J 31/46

(54) **MACHINE AND METHOD FOR BREWING ESPRESSO COFFEE**
MASCHINE UND VERFAHREN ZUM BRÜHEN EINES ESPRESSO
MACHINE AND METHODE POUR L'INFUSION D'UN ESPRESSO

(30) Priority: 10.02.2021 IT 202100002957
(43) Date of publication of application: 17.08.2022
(73) Proprietor: Rocket Milano S.r.L., 20060 Liscate (MI) (IT)
(72) Inventor: BERTI, Ennio, I-20060 Liscate (IT); FERRETTI, Matteo, I-20060 Liscate (MI) (IT)
(74) Representative: Cammareri, Emanuele

(56) References cited:
- EP-A1- 0 231 156
- EP-A1- 3 756 517
- WO-A1-2010/113116

## Description

### TECHNICAL FIELD

The present invention relates to the field of espresso coffee brewing, in particular, the invention relates to a machine and a method for brewing espresso coffee.

### STATE OF THE ART

As is well known, the preparation of espresso coffee requires a predetermined amount of hot water to be forced at high pressure through the pressed coffee powder, also known as coffee tablet. While passing through the coffee powder, the water extracts the aromatic substances, forming the coffee drink. In general, then, espresso coffee machines include a boiler (or heating unit) to heat water, a dispensing unit capable of holding a filter containing the pressed coffee powder, and a pump suitable for feeding hot water to the dispensing unit at a sufficiently high operating pressure (usually about 9 bar) to allow an adequate flow of water through the coffee tablet.

Around this basic structure, various types of machines have been developed which, in order to better adapt to specific needs, differ in the technical solutions used. Within the general scope of espresso coffee machines, in fact, various more specific categories can be identified, for example according to the intended use (professional or domestic), according to the market range (entry level, medium range or high range) or even according to the prevailing tastes of the target market. Each of these factors may suggest the adoption of a specific technical solution among some equivalent solutions.

In particular, there are manual machines called lever or press machines in which the operating pressure of the water is generated manually by the operator through the action of a lever, possibly combined with a spring.

In other machines, however, the working pressure required to push water through the coffee powder is obtained by means of an electric pump (typically a solenoid pump).

Again, in some machines the flow of hot water from the boiler to the dispensing unit is controlled by a manual control (not to be confused with the press lever) with which the operator defines the timing of the operation. The progenitor of this type of machine is the famous Faema E61. In other machines, however, the flow of hot water is controlled by one or more solenoid valves that can be controlled by an electromechanical or, more commonly, electronic control unit. The development of the latter type of machines has gradually led to the automation of the preparation of espresso coffee, with enormous benefits in terms of repeatability of results.

Recently, manually operated machines have experienced a new success linked to the rediscovery of traditions and a taste for vintage, also thanks to the adoption of captivating aesthetic solutions. The present invention finds a particularly advantageous use in such manually operated machines, although it can also be used in other types of machines.

Within the preparation of espresso coffee briefly described above, there are numerous variations that give rise to coffees with different characteristics, for example in terms of volume, aroma, quality and quantity of the cream. Among the known brewing techniques, one which is particularly appreciated, is the one which provides for the so-called pre-brewing phase. In accordance with this practice, once the hot water is fed to the dispensing unit and has completely wet the coffee tablet, the water supply is momentarily suspended, thus introducing a slight delay in the actual brewing. This pre-brewing delay, of the order of 4-5 seconds, has the effect of allowing the coffee powder to absorb the water and swell slightly, further increasing the compactness of the tablet. This increased compactness prevents the water, fed at operating pressure, from finding preferential paths within the coffee tablet. Such paths would lead to an excessive extraction in some areas of the tablet and, consequently, to an incomplete extraction in other areas of the tablet. Pre-brewing, on the other hand, allows for optimal extraction and, all other factors being equal, a much better quality of espresso coffee.

This pre-brewing technique is obtained in a way known per se with programmable machines, in which the control given by the operator activates the electronic control unit which can be programmed at will to control various devices such as pumps and solenoid valves, so as to perform various sequences of operations. Specifically, following a single control given by the operator, the electronic control unit first activates the electric pump to start feeding water to the tablet so as to wet it. Then the electronic board suspends the water supply for a few seconds, for example by suspending the operation of the pump or by closing a solenoid valve along the supply pipe. Finally, the electronic board resumes normal water supply with predefined pressure and flow rate, in order to obtain the coffee drink.

It is also feasible to apply the pre-brewing technique with a non-programmable machine, for example with a manually operated machine. In this case, the operator shall modulate the movement of the manual control, in order to obtain the pre-brewing delay. However, such a way of proceeding is based solely on the skills, sensitivity and experience of the operator and therefore requires a long learning phase. This is inconvenient because throughout the learning phase the results obtained by the operator cannot be optimal. In addition, this technique does not allow for the repeatability of results that is required for professional use.

There is therefore a need to be able to employ the pre-brewing technique with adequate repeatability of results, even with non-programmable machines.

Patent document EP3756517 discloses a water boiler for dispensing units of espresso coffee machines.

### OBJECT AND SUMMARY OF THE INVENTION

The object of the present invention is to overcome the drawbacks of the prior art.

In particular, a task of the present invention is to make available a non-programmable espresso machine that enables the application with adequate repeatability of the pre-infusion technique.

Again, a task of the present invention is to make available a method for the brewing of espresso coffee that allows the pre-brewing technique to be applied with adequate repeatability even with non-programmable machines.

These and other objects and tasks of the present invention are achieved by means of a machine and a method for brewing espresso coffee incorporating the characteristics of the attached claims, which form an integral part of this description.

In accordance with a first aspect, the invention relates to an espresso coffee machine whose dispensing unit comprises a dispensing chamber in connection with a filter for containing a tablet of pressed coffee powder. The dispensing unit also comprises a pre-brewing chamber in connection with the dispensing chamber, in which the pre-brewing chamber comprises a movable wall configured to allow a variation of the internal volume of the pre-brewing chamber as a function of a force exerted on the movable wall by a pressurized liquid. The machine also comprises a pump for supplying pressurized hot water to the dispensing unit; a manual control to operate the pump; a dispensing valve to control the entry of hot water into the dispensing chamber; and a drain valve to control the water outlet from the dispensing unit. The same manual control configured to operate the pump is configured to also control the dispense valve and the drain valve.

Advantageously, the movement of the movable wall, conditioned by the flow of water to the pre-brewing chamber, determines a temporary limitation of the increase in water pressure inside the dispensing chamber. In this way, the water pressure in this phase, substantially around the activation pressure, does not reach sufficient values to cause the water to pass through the tablet. The time it takes for the water to completely fill the pre-brewing chamber and thus allow the pressure to rise to operating pressure is the desired pre-brewing delay, which allows the coffee powder to become sufficiently wet and swell before the water flows through it.

Preferably, the movable wall of the pre-brewing chamber is movable between a rest position and a working position and vice versa, and the pre-brewing chamber comprises thrust means configured to push the movable wall towards the rest position in contrast to the force exerted on the wall mobile.

Preferably, the movable wall comprises stop means which define the working position of the movable wall itself, and the stop means are adjustable.

Preferably, the force exerted by the thrust means on the movable wall in the rest position is adjustable.

Preferably, the pump is configured to supply water at an operating pressure of about 0.8-1 MPa and with a flow rate of at least 180 cc/min.

In accordance with a second aspect, the invention relates to a method for infusing espresso coffee, comprising the steps of:
- Preparing a machine in accordance with what is described above;
- Preparing a tablet of pressed coffee powder in the filter;
- Preparing a hot water supply circuit;
- Feeding a flow of hot water to the dispensing unit;
- Directing the flow of hot water to the dispensing chamber;
- Directing the flow of hot water to the filter in order to wet the coffee tablet;
- Directing the flow of hot water to the pre-brewing chamber;
- Increasing the volume of the pre-brewing chamber in order to accommodate a predetermined volume of water;
- Directing the flow of hot water to the filter;
- Forcing the hot water through the coffee tablet; and
- Brewing the coffee drink.

Preferably, the flow rate of water fed to the dispensing unit is a continuous, uninterrupted and/or substantially constant flow rate of water over time.

Preferably the different steps of directing the flow of hot water are achieved by arranging fluid paths offering different and progressive resistances.

Further characteristics and objects of the present invention will become more apparent from the following description.

### BRIEF DESCRIPTION OF THE DRAWINGS

The invention will be described below with reference to some examples, provided for explanatory and non-limiting purposes, and illustrated in the attached drawings. These drawings illustrate different aspects and embodiments of the present invention and, where appropriate, reference numerals illustrating similar structures, components, materials and/or elements in different figures are indicated by similar reference numerals. Also, for clarity of illustration, some references may not be repeated in all figures.
Figure 1 is a partially sectioned side schematic view of an espresso coffee machine in accordance with the invention;
Figure 2 is an enlarged view of the detail indicated with II in Figure 1;
Figure 3 is a view of the section made along the line III-III in Figure 2;
Figures 4 to 15 represent sections similar to those of Figures 2 and 3, in different and successive use configurations; and
Figures 16 to 23 schematically represent a partial view of a machine in accordance with the invention, in different and successive use configurations.

### DETAILED DESCRIPTION OF THE INVENTION

While the invention is susceptible to various modifications and alternative constructions, some preferred embodiments are shown in the drawings and will be described below in detail. It must be understood, however, that there is no intention of limiting the invention to the specific embodiment illustrated, but, on the contrary, the invention is intended to cover all modifications, alternative constructions, and equivalents that fall within the scope of the invention as defined in the claims.

The use of "for example", "etc.", "or" indicates non-exclusive alternatives without limitation unless otherwise indicated. The use of "comprises" and "includes" means "comprises or includes, but not limited to" unless otherwise indicated.

The invention is intended to be used in the presence of gravity acceleration g. In the following discussion it is understood that the acceleration of gravity g uniquely defines the vertical direction and, consequently, the horizontal directions. Furthermore, it is considered that based on the acceleration of gravity *g* the terms "high", "above", "higher" and the like are uniquely defined with respect to the terms "low", "below", "lower" and the like.

With "manual control" reference is made to a control that does not include the intermediation of any programmable electronic or electromechanical device. Specifically, the manual control in a coffee machine allows the operator to act directly on the valves and on the pump drive.

In accordance with a first aspect, the invention relates to an espresso coffee machine, indicated with 48 in the attached figures.

The machine 48 according to the invention comprises a dispensing unit 30 comprising a dispensing chamber 32 in fluid connection with a filter 34 configured to contain a tablet 36 of pressed coffee powder. The dispensing unit 30 further comprises a pre-brewing chamber 38 in fluid connection with the dispensing chamber 32, wherein the pre-brewing chamber 38 comprises a movable wall 40 configured to allow a variation of the internal volume of the pre-brewing chamber 38 as a function of a force exerted on the movable wall 40 by a liquid fed to the pre-brewing chamber 38.

Machine 48 in accordance with the invention also includes:
- a pump 50 configured to feed hot water under pressure to the dispensing unit 30, where the fluid fed to the pre-brewing chamber 38 is hot water;
- a manual control 52 configured to operate the pump 50;
- a dispensing valve 54 configured to control the entry of hot water into the dispensing chamber 32; and
- a drain valve 56, configured to control the outlet of water from a drain 46 of the dispensing unit 30.

In the machine 48 in accordance with the invention, the same manual control 52 configured to operate the pump 50 is configured to also control the dispensing valve 54 and the drain valve 56.

Preferably, the movable wall 40 of the pre-brewing chamber 38 is movable between a rest position R and a working position L and vice versa. In the rest position R the movable wall 40 defines the minimum internal volume of the pre-brewing chamber 38, while in the working position L the movable wall 40 defines the maximum internal volume of the pre-brewing chamber 38. Preferably, the pre-brewing chamber 38 further comprises thrust means 42 suitable to push the movable wall 40 towards the rest position R. The thrust means 42 therefore oppose the movement of the movable wall 40 towards the working position L.

Advantageously, the movable wall 40 comprises stop means 44 which define the stroke end and therefore the working position L of the movable wall 40 itself. Preferably, the stop means 44 are adjustable in such a way as to be able to adjust the overall stroke of the movable wall 40.

In accordance with the embodiments of the attached figures, the thrust means 42 comprise elastic means, in particular a spring, which push the movable wall 40 towards the rest position R. In accordance with other embodiments (not shown) the movable wall 40 and the relative thrust means 42 can assume a different structure. For example, the movable wall 40 can be arranged for a translation which develops at least partially vertically, in which the rest position R is lower than the working position **L,** and in which the thrust means 42 comprise a weight which acts by gravity on the movable wall 40.

In accordance with some embodiments, the force exerted by the thrust means 42 on the wall in the rest position R is adjustable. For example, the elastic thrust means 42 may comprise a preload adjustment.

The force exerted by the thrust means 42 on the movable wall 40 in the rest position R, in relation to the useful area of the movable wall 40 itself, defines the activation pressure of the pre-brewing chamber 38. As the skilled person may well understand, by useful area of the movable wall 40 it is meant the measure of its projection onto a plane perpendicular to the direction along which the movable wall 40 itself moves.

Advantageously, the dispensing unit 30 further comprises a drain 46, in fluid connection with the dispensing chamber 32. Preferably, the drain 46 is positioned in a lower part of the dispensing unit 30.

The operation of the dispensing unit 30 of the machine 48 in accordance with the invention, and in particular of the pre-brewing chamber 38, will be described in detail later.

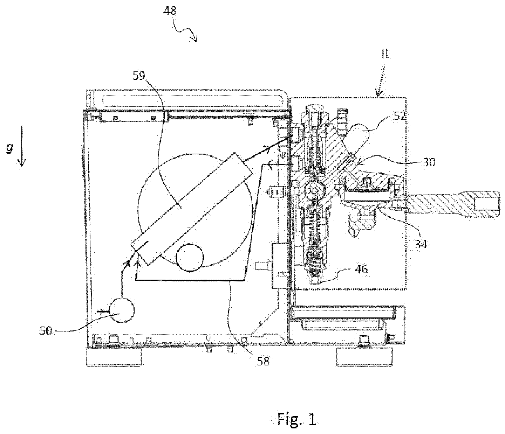

The espresso coffee machine 48 according to the invention comprises a dispensing valve 54 which controls the entry of hot water into the dispensing chamber 32 and a drain valve 56 that controls the exit of water from the drain 46 at the end of the brewing process. In the embodiment of Figures 1 through 15, the drain valve 56 includes, in a per se known manner, two shutters acting in series along the drain 46.

In a per se known manner, the machine 48 includes a hot water circuit 58 that ensures the supply of water at a predetermined temperature (usually about 90°C) and in an amount appropriate for the intended use of the machine 48. The hot water circuit 58 may take on different configurations depending on the types of machine 48, but typically includes a boiler 59 and a chamber, referred to as thermosyphonic chamber 60, located immediately upstream of the dispensing valve 54. The thermosyphonic chamber 60 is advantageously configured to promote spontaneous circulation of hot water to and from the boiler 59, such that water is constantly present at the desired temperature.

In a per se known manner, the pump is configured to supply water at an operating pressure and flow rate suitable for the preparation of coffee and other hot drinks. According to an embodiment, the pump 50 is configured to supply water at an operating pressure of about 8-10 bar (i.e. about 0.8-1 MPa) and with a flow rate suitable for the brewing of coffee drinks, for example a flow rate of at least 180 cc / min. Preferably the hot water pump 50 is an electric pump, for example a solenoid pump. The pump 50 is operated by the operator through the manual control 52. The dispensing unit 30 according to the invention is in fact particularly suitable for the machines 48 with manual control, although it can also be applied to other types of machines 48, including those press but also electronic and automatic ones.

The same manual control 52, which activates the water pump 50, also controls the dispensing valve 54 and the drain valve 56. For example, if the manual control 52 is of the well-known lever type, the machine 48 can comprise one or more cams 62 suitable for controlling the two valves 54 and 56. In particular, along the stroke that is imposed on the lever to operate the pump 50, the lever itself moves the cam 62 which controls in the correct sequence the opening and closing of the two valves 54 and 56.

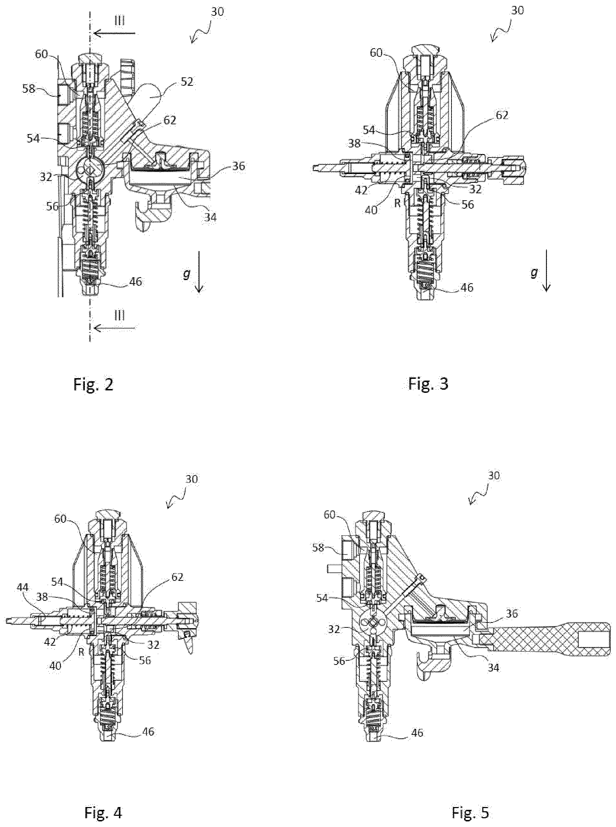

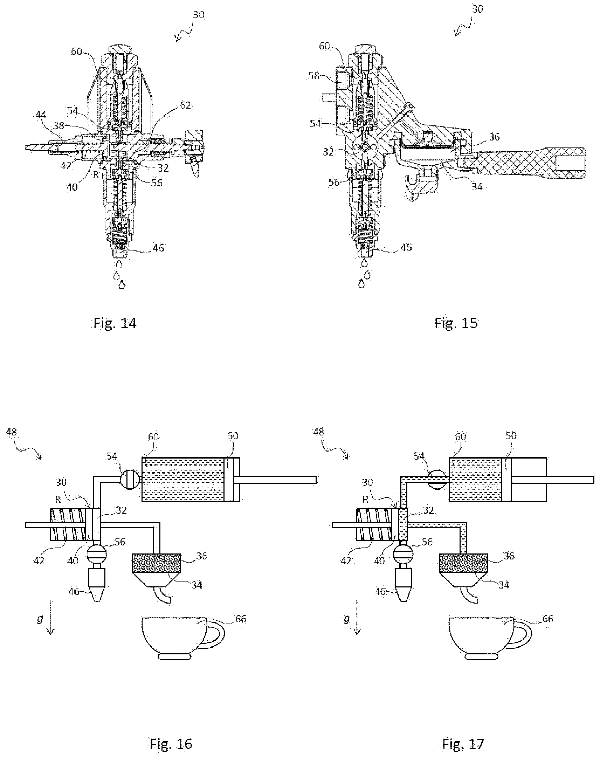

The attached figures 4 to 15 show the dispensing unit 30 of a machine 48 in accordance with an embodiment of the invention in subsequent configurations of use. The attached figures 16 to 23 schematically show the dispensing unit 30 and some parts of the espresso machine 48 in accordance with an embodiment of the invention. The operation of the dispensing unit 30 and of the espresso coffee machine 48 is described in detail below with particular reference to these figures.

Figures 4, 5 and 16 show a waiting situation, wherein the machine 48 is ready to dispense a dose of coffee drink 64. The filter 34 comprises a tablet 36 of pressed coffee powder, the dispensing unit 30 is empty, while the hot water, coming from the special supply circuit 58, fills the thermosiphonic chamber 60 and slowly circulates inside it. In the simplified diagram of Figures 16 to 23, the thermosiphonic chamber 60 also comprises a plunger which represents the pump 50. This diagram, however, has only an illustrative purpose, while the construction diagram of the actual machine 48 may be different. For example, in Figures 4 to 15 only the thermosiphonic chamber 60 is represented because the pump 50 is a distinct element. In the waiting situation of Figures 4 and 5, the dispensing valve 54 is closed, while the drain valve 56 is open. In the waiting situation of Figure 16, the dispensing valve 54 and the drain valve 56 are both closed. In the absence of any external force, the thrust means 42 keep the movable wall 40 of the pre-brewing chamber 38 in the rest position R. In figure 16, a cup 66 has been arranged to collect the coffee drink 64.

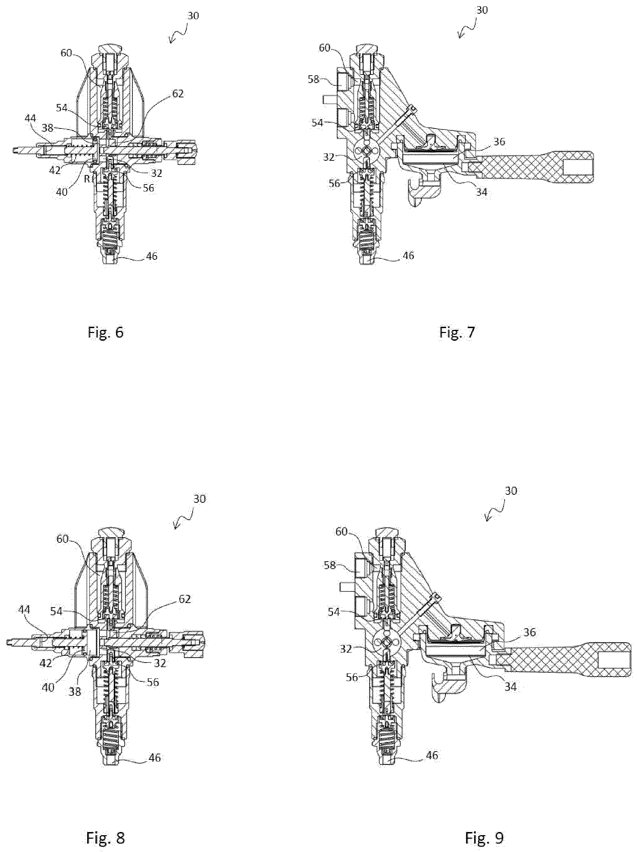

Figures 6, 7 and 17 schematically show a step in the process of dispensing a dose of coffee. The dispensing valve 54 is open while the drain valve 56 is closed. As the skilled person may well understand, the hot water begins to follow the fluid path that leads it to fill the dispensing chamber 32 and to reach the filter 34, in order to wet the coffee tablet 36. Since this path offers minimal resistance, the water can travel along it with a negligible pressure, for example that present in the circuit 58, even regardless of the action of the pump 50. Consequently, in this initial step, the movable wall 40 of the pre-brewing chamber 38 remains in its own rest position R due to the action of the thrust means 42.

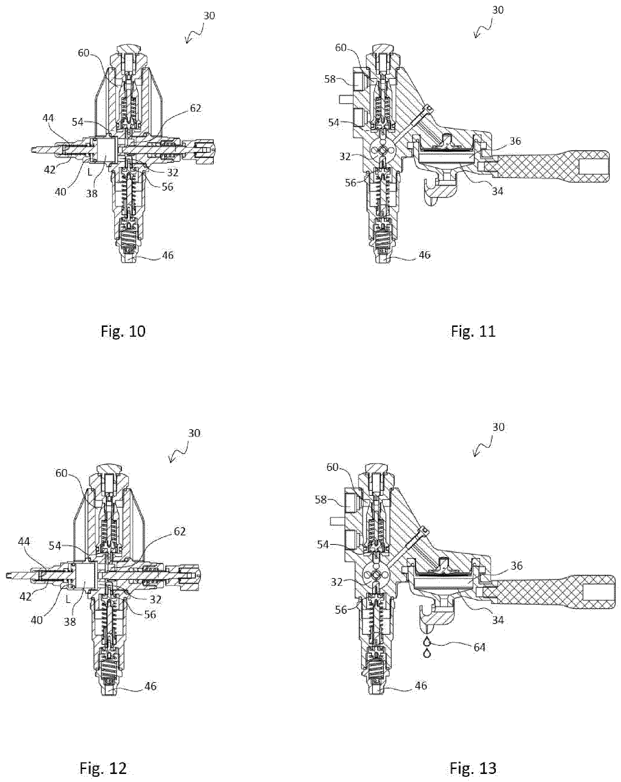

Figures 8 to 11 and 18 schematically show a subsequent step of the process of dispensing a dose of coffee. Under the action of pump 50, hot water follows the fluid path that offers less resistance. Tablet 36 is made up of very fine, pressed coffee powder. Therefore, while being permeable, it offers great resistance to water. Without having an easy path available, the water increases its pressure due to the action of the pump 50. Before reaching the operating pressure (i.e. the pressure level necessary to cross the coffee tablet 36), the pressure of the water reaches the activation pressure of the pre-brewing chamber 38, that is, it manages to overcome the action of the thrust means 42 on the movable wall 40. Then the movable wall 40 moves from the rest position R towards the working position **L,** offering the water a path with a lower resistance than that which crosses the tablet 36. In this way the internal volume of the pre-brewing chamber 38 gradually increases, gradually accepting a predetermined volume of water. Figures 8 and 9 show an intermediate step in which the pre-brewing chamber 38 is partially filled, while Figures 10, 11 and 18 show a final step in which the pre-brewing chamber 38 is completely filled with water. The displacement of the movable wall 40 and the flow of water to the pre-brewing chamber 38 allow to temporarily limit the increase in the pressure of the water inside the dispensing chamber 32. Preferably, the water pressure in this step remains substantially constant, around the activation pressure. The time taken by the water to completely fill the pre-brewing chamber 38 constitutes the desired pre-brewing delay, which allows the previously wet coffee powder to swell. In fact, during this time the water does not have a sufficient pressure to pass through the tablet 36 and therefore goes towards the pre-brewing chamber 38.

Figures 12, 13 and figure 19 show a further step in the process of brewing a dose of coffee. From the moment in which the movable wall 40 of the pre-brewing chamber 38 has reached its stroke end (Figures 10, 11 and 18), the pressure in the water begins to increase again due to the action of the pump 50. In particular, because there is no other outlet, the water increases its pressure up to the operating pressure, necessary to cross the coffee tablet 36 by now swollen by the water that had reached it previously during the initial dispensing step. In this step, therefore, the water passes through the tablet 36 and the actual dispensing of the coffee drink 64 takes place, which is collected by gravity in the cup 66.

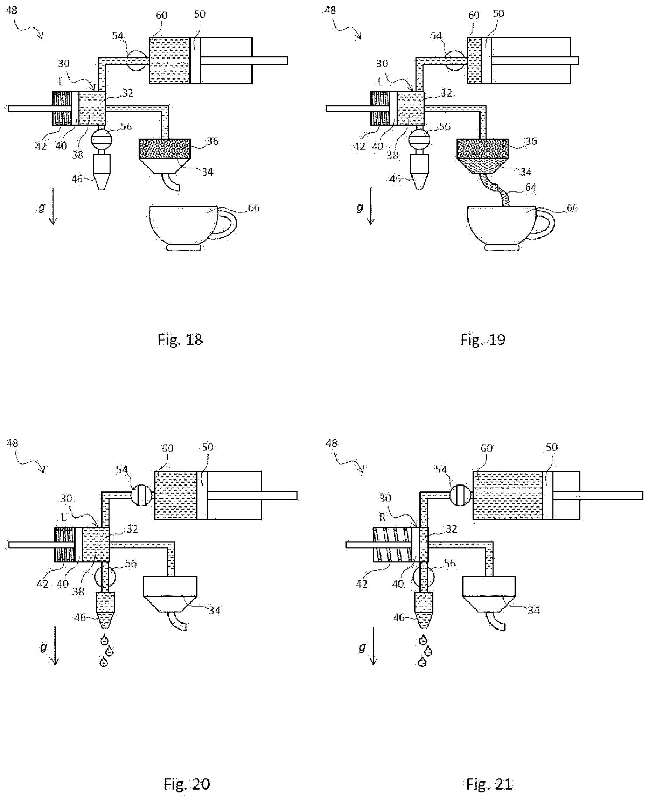

Figure 20 schematically shows a step of restoring the dispensing unit 30. As can be seen, with respect to Figure 19, the dispensing valve 54 is closed while the drain valve 56 is open, allowing excess hot water still filling the dispensing assembly 30 to drain by gravity. Furthermore, the exhausted coffee powder has been removed from the filter 34, while the hot water, coming from the special supply circuit 58, returns to fill the thermosiphonic chamber 60 upstream of the dispensing valve 54.

Figures 14, 15 and 21 schematically show a subsequent step of restoring the dispensing unit 30. This step is very similar to that described above in relation to Figure 20, in which the dispensing valve 54 is closed and the drain valve 56 is open. An important difference concerns the pre-brewing chamber 38. Thanks to the reduction of the water pressure, which vents outwards through the drain 46, the thrust means 42 bring the movable wall 40 back to the rest position R, expelling the water from the pre-brewing chamber 38 and making it exit by gravity from the drain 46.

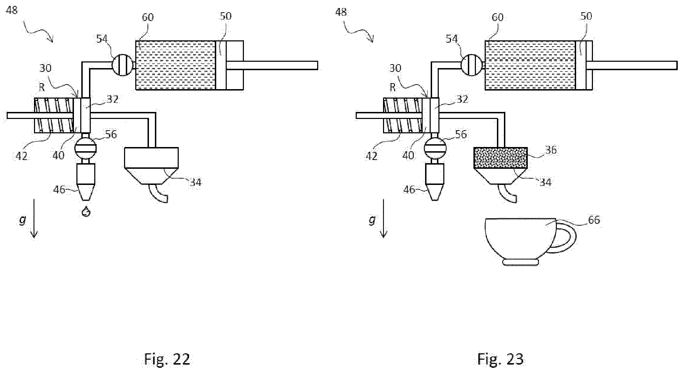

Figure 22 schematically shows a further step of restoring the dispensing unit 30. As it can be seen, with respect to Figure 21, the dispensing chamber 32 and all the various ducts of the dispensing unit 30 are now empty, the drain valve 56 is closed and the thermosiphonic chamber 60 is progressively filling with hot water.

Figure 23 schematically shows a waiting situation, in all respects similar to the initial one represented in figure 16, in which the machine 48 is ready to dispense a dose of coffee. As can be seen, with respect to figure 22, the coffee tablet 36 has once again been placed in the filter 34 and a cup 66 has once again been prepared to collect the coffee drink 64.

In the light of the detailed description above, the skilled person will be able to better understand some technical features and their effects.

For example, the possibility described above of adjusting the length of the stroke of the movable wall 40 allows adjusting the time of the pre-brewing delay introduced in the dispensing of the coffee drink 64. Preferably, this delay assumes a duration of about 4-5 seconds.

Advantageously, the thrust means 42 are sized so as to provide an activation pressure lower than the operating pressure. In particular, while the operating pressure is preferably between 8 and 10 bar, the activation pressure is preferably between 1 and 4 bar, even more preferably between 2 and 3 bar. The ability described above to adjust the force applied by the thrust means 42 to the movable wall 40, allows adjusting the activation pressure, in order to better configure the machine 48 to the different conditions of use that may occur.

As the skilled person may well understand, the dispensing unit 30 can be used in various types of espresso coffee machines 48. The most advantageous application is undoubtedly on the machines 48 with manual control 52 in accordance with the invention, since the dispensing unit 30 allows repeatable application of the pre-brewing technique even in the absence of any programmable device, such as an electronic control unit, to automatically introduce the pre- brewing delay in dispensing. However, the dispensing unit 30 can also be used in different machines 48, for example in press machines as well as in other machines that employ an electric pump 50. In any case, the machine 48 of the invention allows the pre-brewing delay to be obtained mechanically rather than by means of a specific programming of the operation.

In accordance with a second aspect, the invention relates to a method for brewing a coffee drink 64. The method includes the steps of:
- Preparing a machine 48 in accordance with what is described above;
- Preparing a tablet 36 of pressed coffee powder in the filter 34;
- Preparing a hot water supply circuit 58;
- Feeding a flow of hot water to the dispensing unit 30;
- Directing the flow of hot water to the dispensing chamber 32;
- Directing the flow of hot water to the filter 34 so as to wet the coffee tablet 36;
- Directing the flow of hot water to the pre-brewing chamber 38;
- Increasing the volume of the pre-brewing chamber 38 in order to accommodate a predetermined volume of water;
- Directing the flow of hot water to filter 34;
- Forcing the hot water through the coffee tablet 36; and
- Brewing the coffee drink 64.

Preferably, the water flow fed to the dispensing unit 30 is a continuous and uninterrupted water flow. Preferably, the flow of water fed to the dispensing unit 30 is a substantially constant water flow over time.

Furthermore, as the skilled person may well understand in the light of the above description, the different steps of directing the flow of hot water can be obtained simply by arranging fluid paths that offer different and progressive resistances. More specifically, at the beginning of the brewing, the dispensing chamber 32 and the ducts that connect it to the filter 34 are completely free from obstacles and therefore the hot water that is fed to the dispensing unit 30, even at very low pressure, follows spontaneously this path, filling the dispensing chamber 32 and reaching the filter 34 and the coffee tablet 36.

Subsequently, once the tablet 36 is wet, in a traditional method of the known type, the hot water should increase its internal pressure to the point of being able to pass through the coffee tablet 36, which offers a very high resistance. The tablet 36 in fact is made up of very fine and pressed ground coffee powder, and therefore, although it is permeable, it offers a high resistance to water. Alternatively, in a known method that provides for the pre-brewing phase, the water flow would be suspended for a predefined time, thus introducing the pre-brewing delay.

Unlike what occurs in known methods, at this point of the method according to the invention, the flow of hot water does not undergo any interruption or decrease and is directed to the pre-brewing chamber 38. By increasing its volume, the pre-brewing chamber 38 is able to accommodate a predetermined volume of water. Preferably, the step of directing the water flow to the pre-brewing chamber 38 includes the sub-steps of:
- providing thrust means 42 which act on the movable wall 40 defining an activation pressure of the pre-brewing chamber 38; and
- increasing the internal pressure of the water up to the activation pressure.

The time taken by the hot water to completely fill the pre-brewing chamber 38 represents the desired pre-brewing delay during which the wet coffee powder can swell, further compacting the coffee tablet 36.

Similarly to what is described above, the step of directing the water flow back to the filter 34 includes the sub-steps of:
- preparing the coffee tablet 36 so that it defines an operating pressure higher than the activation pressure of the pre-brewing chamber 38; and
- increasing the internal pressure of the water up to the operating pressure.

As the skilled person can well understand from the description above, the different steps of directing the flow of hot water can be obtained without the use of solenoid valves or other similar devices, therefore without actually closing any ducts.

As the skilled person may well understand, the invention overcomes the drawbacks highlighted above in relation to the prior art.

In particular, the invention makes available a non-programmable espresso coffee machine 48 that allows the pre-brewing technique to be applied with adequate repeatability.

Furthermore, the invention makes available a method for infusing espresso coffee that allows the pre-brewing technique to be applied with adequate repeatability even with non-programmable machines.

Finally, all the details can be replaced by other technically equivalent elements.

In conclusion, the materials used, as well as the contingent shapes and dimensions, may be any according to the specific implementation needs without thereby departing from the protection scope of the following claims.

## Claims

1. Espresso coffee machine (48), comprising:
- a dispensing unit comprising a dispensing chamber (32) in fluid connection with a filter (34) configured to contain a tablet (36) of pressed coffee powder, wherein the dispensing unit (30) further comprises a pre-brewing chamber (38) in fluid connection with the dispensing chamber (32), and wherein the pre-brewing chamber (38) comprises a movable wall (40) configured to allow a variation of the internal volume of the pre-brewing chamber (38) as a function of a force exerted on the movable wall (40) by a fluid fed to the pre-brewing chamber (38);
- a pump (50) configured to feed hot water under pressure to the dispensing unit (30), where the fluid fed to the pre-brewing chamber (38) is hot water;
- a manual control (52) configured to operate the pump (50);
- a dispensing valve (54) configured to control the entry of hot water into the dispensing chamber (32); and
- a drain valve (56), configured to control the outlet of water from a drain (46) of the dispensing unit (30);
**characterized in that** the same manual control (52) configured to operate the pump (50) is configured to also control the dispensing valve (54) and the drain valve (56).

2. Machine (48) according to claim 1, wherein the movable wall (40) of the pre-brewing chamber (38) is movable between a rest position R and a working position L and vice versa, and wherein the pre-brewing chamber (38) comprises thrust means (42) configured to push the movable wall (40) towards the rest position R in contrast to the force exerted on the movable wall (40) by the fluid.

3. Machine (48) according to claim 2, wherein the movable wall (40) comprises stop means (44) which define the working position L of the movable wall (40) itself and wherein the stop means (44) are adjustable.

4. Machine (48) according to claim 2 or 3, wherein the force exerted by the thrust means (42) on the movable wall (40) in the rest position R is adjustable.

5. Machine (48) according to claim 1, wherein the pump (50) is configured to supply water at an operating pressure of about 0.8-1 MPa and with a flow rate of at least 180 cc / min.

6. Method for brewing espresso coffee, including the steps of:
- Providing a machine (48) in accordance with one or more of claims 1 to 5;
- Preparing a tablet (36) of pressed coffee powder in the filter (34);
- Preparing a hot water supply circuit (58);
- Feeding a flow of hot water to the dispensing unit (30);
- Directing the flow of hot water to the dispensing chamber (32);
- Directing the flow of hot water to the filter (34) so as to wet the coffee tablet (36);
- Directing the flow of hot water to the pre-brewing chamber (38);
- Increasing the internal volume of the pre-brewing chamber (38) in order to accommodate a predetermined volume of water;
- Directing the flow of hot water to the filter (34);
- Forcing the water through the coffee tablet (36); and
- Brewing the coffee drink (64).

7. Method according to claim 6, wherein the different steps of directing the flow of hot water are achieved by arranging fluid paths providing different and progressive resistances.

## Patentansprüche

1. Espressomaschine (48), umfassend:
- eine Brüheinheit, die eine Brühkammer (32), in Fluidverbindung mit einem Filter (34) umfasst, der so ausgebildet ist eine Tablette (36) aus gepresstem Kaffeepulver zu enthalten, wobei die Brüheinheit (30) eine Vorbrühkammer (38) in Fluidverbindung mit der Brühkammer (32) ferner umfasst und, wobei die Vorbrühkammer (38) eine bewegliche Wand (40) umfasst, die so ausgebildet ist, eine Veränderung des Innenvolumens der Vorbrühkammer (38) zu ermöglichen in Abhängigkeit von einer Kraft, die auf die bewegliche Wand (40) durch ein Fluid ausgeübt wird, das in die Vorbrühkammer (38) zugeführt wird;
- eine Pumpe (50), die so ausgebildet ist, heißes Wasser unter Druck an die Brüheinheit (30) zu fördern, wobei das in die Vorbrühkammer (38) geführte Fluid heißes Wasser ist;
- eine manuelle Steuerung (52) zum Betreiben der Pumpe (50);
- ein Abgabeventil (54), das den Zulauf von heißem Wasser in die Brühkammer (32) steuert; und
- ein Ablassventil (56), das den Wasseraustritt aus einem Abfluss (46) der Brüheinheit (30) steuert;
**dadurch gekennzeichnet, dass** dieselbe manuelle Steuerung (52), die zum Betreiben der Pumpe (50) ausgebildet ist, auch zum Steuern des Abgabeventils (54) und des Ablassventils (56) ausgebildet ist.

2. Maschine (48) nach Anspruch 1, wobei die bewegliche Wand (40) der Vorbrühkammer (38) zwischen einer Ruheposition R und einer Arbeitsposition L und umgekehrt beweglich ist, und wobei die Vorbrühkammer (38) Schubmittel (42) umfasst, die dazu ausgebildet sind, die bewegliche Wand (40) in Richtung der Ruheposition zu schieben, im Gegensatz zu der Kraft, die auf die bewegliche Wand (40) durch das Fluid ausgeübt wird.

3. Maschine (48) nach Anspruch 2, wobei die bewegliche Wand (40) Anschlagmittel (44) umfasst, welche die Arbeitsposition L der beweglichen Wand (40) selbst definieren und, wobei die Anschlagmittel (44) einstellbar sind.

4. Maschine (48) nach Anspruch 2 oder 3, wobei die von den Schubmitteln (42) auf die bewegliche Wand (40) in der Ruheposition R ausgeübte Kraft einstellbar ist.

5. Maschine (48) nach Anspruch 1, wobei die Pumpe (50) so ausgebildet ist Wasser mit einem Betriebsdruck von etwa 0,8-1 MPa und einer Durchflussrate von mindestens 180 cm³/min zu fördern.

6. Verfahren zur Zubereitung von Espresso-Kaffee, umfassend die folgenden Schritte:
- Bereitstellen einer Maschine (48) gemäß einem oder mehreren der Ansprüche 1 bis 5;
- Zubereiten einer Tablette (36) aus gepresstem Kaffeepulver im Filter (34);
- Zubereiten eines Heißwasserstroms (58);
- Zuführen eines Heißwasserstroms zur Brüheinheit (30);
- Leiten des Heißwasserstroms zur Brühkammer (32);
- Leiten des Heißwasserstroms zum Filter (34), um die Kaffeetablette (36) zu benetzen;
- Leiten des Heißwasserstroms zur Vorbrühkammer (38);
- Erhöhen des Innenvolumens der Vorbrühkammer (38), um eine vorgegebene Wassermenge aufzunehmen;
- Leiten des Heißwasserflusses zum Filter (34);
- Durchleiten des Wassers durch die Kaffeetablette (36); und
- Brühen des Kaffeegetränks (64).

7. Verfahren nach Anspruch 6, wobei die verschiedenen Schritte der Heißwasserleitung durch die Anordnung von Flüssigkeitspfade mit unterschiedlichen und progressiven Widerständen erreicht werden.

## Revendications

1. Machine à café expresso (48), comprenant :
- une unité de distribution comprenant une chambre de distribution (32) en communication fluidique avec un filtre (34) configuré pour contenir une pastille (36) de café moulu pressé, **caractérisé en ce que** l'unité de distribution (30) comprend en outre une chambre de pré-infusion (38) en communication fluidique avec la chambre de distribution (32), et **en ce que** la chambre de pré-infusion (38) comprend une paroi mobile (40) configurée pour permettre une variation du volume interne de la chambre de pré-infusion (38) en fonction d'une force exercée sur la paroi mobile (40) par un fluide acheminé vers la chambre de pré-infusion (38);
- une pompe (50) configurée pour alimenter en eau chaude sous pression l'unité de distribution (30), dans laquelle le fluide acheminé vers la chambre de pré- infusion (38) est de l'eau chaude;
- une commande manuelle (52) configurée pour faire fonctionner la pompe (50);
- une vanne de distribution (54) configurée pour contrôler l'entrée de l'eau chaude dans la chambre de distribution (32) ; et
- une vanne de vidange (56), configurée pour contrôler l'évacuation de l'eau d'un drain (46) de l'unité de distribution (30) ;
**caractérisée en ce que** la même commande manuelle (52) configurée pour faire fonctionner la pompe (50) est configurée pour commander également la vanne de distribution (54) et la vanne de vidange (56).

2. Machine (48) selon la revendication 1, **caractérisée en ce que** la paroi mobile (40) de la chambre de pré-infusion (38) est mobile entre une position de repos R et une position de travail L et inversement, et **en ce que** la chambre de pré-infusion (38) comprend un organe de poussée (42) configuré pour pousser la paroi mobile (40) vers la position de repos R par opposition à la force exercée sur la paroi mobile (40) par le fluide.

3. Machine (48) selon la revendication 2, **caractérisée en ce que** la paroi mobile (40) comprend un organe de butée (44) qui définit la position de travail L de la paroi mobile (40) elle-même et **en ce que** l'organe de butée (44) est réglable.

4. Machine (48) selon la revendication 2 ou 3, **caractérisée en ce que** la force exercée par l'organe de poussée (42) sur la paroi mobile (40) dans la position de repos R est réglable.

5. Machine (48) selon la revendication 1, **caractérisée en ce que** la pompe (50) est configurée pour fournir de l'eau à une pression de fonctionnement d'environ 0,8-1 MPa et avec un débit d'au moins 180 cc / min.

6. Procédé de préparation d'un café expresso, comprenant les étapes suivantes:
- Fournir une machine (48) selon l'une ou plusieurs des revendications 1 à 5;
- Préparer une pastille (36) de café moulu pressé dans le filtre (34) ;
- Préparer un circuit d'alimentation en eau chaude (58);
- Alimenter un flux d'eau chaude vers l'unité de distribution (30) ;
- Diriger le flux d'eau chaude vers la chambre de distribution (32) ;
- Diriger le flux d'eau chaude vers le filtre (34) de manière à humidifier la pastille de café (36);
- Diriger le flux d'eau chaude vers la chambre de pré-infusion (38) ;
- Augmenter le volume interne de la chambre de pré-infusion (38) afin d'accueillir un volume d'eau prédéterminé ;
- Diriger le flux d'eau chaude vers le filtre (34);
- Forcer le passage de l'eau à travers la pastille de café (36); et
- Infuser la boisson au café (64).

7. Procédé selon la revendication 6, **caractérisé en ce que** les différentes étapes de l'acheminement du flux d'eau chaude sont réalisées en disposant les pastilles de café (36) de manière à ce que l'eau puisse s'écouler dans le filtre (34) et à ce que la boisson au café (64) puisse être infusée.
